# EUROPEAN PATENT SPECIFICATION

(11) **EP 2 118 879 B1**
(45) Date of publication and mention of the grant of the patent: **09.10.2013**
(21) Application number: 08729445.0
(22) Date of filing: 08.02.2008
(51) Int. Cl.: G09G 3/02, G09G 3/36

(54) **DRIVE SYSTEM FOR AN OPTICALLY ADDRESSED SPATIAL LIGHT MODULATOR**
ANTRIEBSSYSTEM FÜR OPTISCH ADRESSIERTEN LICHT-RAUM-MODULATOR
SYSTÈME D'ENTRAÎNEMENT POUR UN MODULATEUR SPATIAL DE LUMIÈRE ADRESSÉ OPTIQUEMENT

(30) Priority: 09.02.2007 US 900331 P
(43) Date of publication of application: 18.11.2009
(73) Proprietor: F. Poszat HU, L.L.C., Wilmington, DE 19808 (US)
(72) Inventor: STANLEY, Maurice, Malvern, Worcestshire WR14 3PS (GB); COOMBER, Stuart, David, Malvern, Worcestshire WR14 3PS (GB)
(74) Representative: Small, Gary James
(86) International application number: PCT/US2008/053481
(87) International publication number: WO 2008/098205

(56) References cited:
- EP-A- 0 437 238
- WO-A-2004/036537
- WO-A-2004/079705
- WO-A-2005/048233
- WO-A-2006/061749
- US-A- 6 133 894
- US-A1- 2004 227 720
- US-B1- 6 507 330

## Description

### Field of Use

A system for controlling an optically addressed spatial light modulator to prevent degradation of the modulation layer of the spatial light modulator.

### Background

The drive signals applied to the liquid crystal (LC) layer of an LC device need to be carefully controlled to prevent charge build-up across the LC layer. If such a charge is allowed to build up the liquid crystal materials can be affected, resulting in the short term in image sticking, and in the longer term in electro-chemical degradation of the LC materials themselves.

Optically addressed spatial light modulators (OASLMs) are optical devices that are controlled not only by an electrical drive signal, but also by a light intensity pattern. The means for ensuring a zero net charge across the active modulation layer is thus more complicated.

An optically addressed spatial light modulator (OASLM) is an optical device that, when under the presence of an appropriate drive voltage, converts an input two dimensional (2D) light intensity distribution across the plane of the device into a 2D modulating pattern. The device functionally comprises a photoconductor and a light modulator. The photoconductor is activated by light incident upon it. When this occurs, the photoconductor reduces in electrical resistance, and switches a voltage through to the light modulator such that light falling upon the modulator is changed in some way.

Both the photoconductor and the light modulator are selective in that only those areas activated by the appropriate control signal react to that control signal. Thus an illumination pattern incident upon the photoconductor results in the photoconductor changing its resistance in a 2D pattern according to the intensity of the light. When driven, this results in a voltage being applied through the low resistance parts of the photoconductor to the modulator, which again only acts in regions where the voltage is applied, matching the original 2D illumination pattern. Any light incident upon the modulation layer is modulated accordingly. The light source that is used to activate the photoconductor may be separate from the light source that is used to illuminate the light modulator. The light source intended for the photoconductors may be termed the write beam or the write light, while the light source that illuminates the modulator may be called the read beam or read light.

In cross section, a typical OASLM is layered functionally as follows. Looking first at the write side, there is a first transparent substrate, coated on one side with a transparent conductive layer, the first electrode. Next to this lies a photoconductor layer. On top of the photoconductive layer there may be a light blocking layer which prevents write-side illumination from getting to the read side or vice versa. There may also be a mirror on top of this stack of layers so that light entering the device from the opposite side, the readout side, is reflected back. On top of the photosensor, light blocking layer, and mirror layers, a light modulation layer may be formed beneath a second transparent substrate. The light modulation layer may be a LC layer.

The second transparent substrate has a transparent electrode coating on the 'inside' surface. In the case of a liquid crystal modulation effect being used, the liquid crystal layer comprises a thin gap between the photoconductor and second substrate. The inside surfaces of this void are treated to align liquid crystal monomers, and the void is filled with the desired liquid crystal material. The structure may be arranged so that voltages can be applied across the device via the two transparent electrodes. In the case where no light is incident on the photosensor layer, any voltage applied across the device is predominantly dropped across the high resistance photosensor layer and the light modulation layer is not activated.

If a light intensity pattern carried by the write beam falls onto the photosensitive side of the OASLM, then those areas sufficiently illuminated will activate the photoconductor beneath, reducing the resistance of the photoconductor and therefore dropping more voltage across the LC layer. Given a sufficient, sensitizing voltage, this will have the effect of activating the LC layer by means of placing a charge across it. The LC layer thus activated causes any light incident upon it, such as the read beam, to be modulated as it passes through the LC layer and is reflected from the mirrored light blocking layer. Thus the image that was projected onto the write side produces a corresponding modulation pattern on the read side. This may be referred to as an optical writing action.

Before the OASLM is written to, the modulation layer should be in a known state. Applying an initial reset pulse or voltage pulse may be used to affect the LC modulation layer through the photoconductor layer with no light present on the photoconductor. However, this may result in an imbalance of charge across the modulation layer, as the reset pulse is applied to the whole electrode area of the OASLM, whereas the light distribution during the write operation across the OASLM may not be uniform.

EP 0 437 238 A2 discloses a driving method for an optically writeable liquid crystal light valve wherein write and erase operations apply alternating forward polarity and reverse polarity voltages, respectively, during a frame. The erasing duration may be set shorter than the sum of writing and holding to maintain image brightness. The erase operation is achieved by applying a reset voltage pulse which forward-biases the photoconductor layer across the entire display area.

US 6,507,330 B1 discloses DC-balanced and non-DC-balanced drive schemes for liquid crystal devices. In these schemes, a product of the voltage and time of an inverse image can be set equal to the product of the voltage and time of the displayed image in order to balance the electric fields. The voltage of the inverse image may be increased with respect to the displayed image so as to decrease the corresponding time associated with the inverse image. The voltage signals associated with the inverse image are inverted in polarity relative to the voltage signals associated with the displayed image.

US 2004/0227720 A1 discloses a driving method for a display apparatus with pixel addressing electrodes in which a reset voltage may be determined based on a calculation including previous write and reset voltages in order to provide a uniform value of a residual DC voltage component.

The invention is defined by the independent claims. The dependent claims concern optional features of some embodiments of the invention.

### BRIEF DESCRIPTION OF THE DRAWINGS

The various embodiments will now be described, by way of example only, with reference to the following drawings in which:
Figure 1 diagrammatically illustrates an optically addressable spatial light modulator (OASLM) shown in cross-sectional form;
Figure 2 diagrammatically illustrates in simplified form waveforms generated in a system driving an OASLM;
Figure 3 diagrammatically illustrates the charge present on an LC device at various stages in the writing and erasing cycle;
Figure 4 diagrammatically illustrates the charge present on a pixel of an OASLM when being driven;
Figure 5 diagrammatically illustrates the charge present on an LC device at various stages in the writing and erasing cycle;
Figure 6 diagrammatically illustrates in simplified form typical waveforms generated in a system driving an OASLM; and
Figure 7 illustrates a method for driving an OASLM.

### DETAILED DESCRIPTION

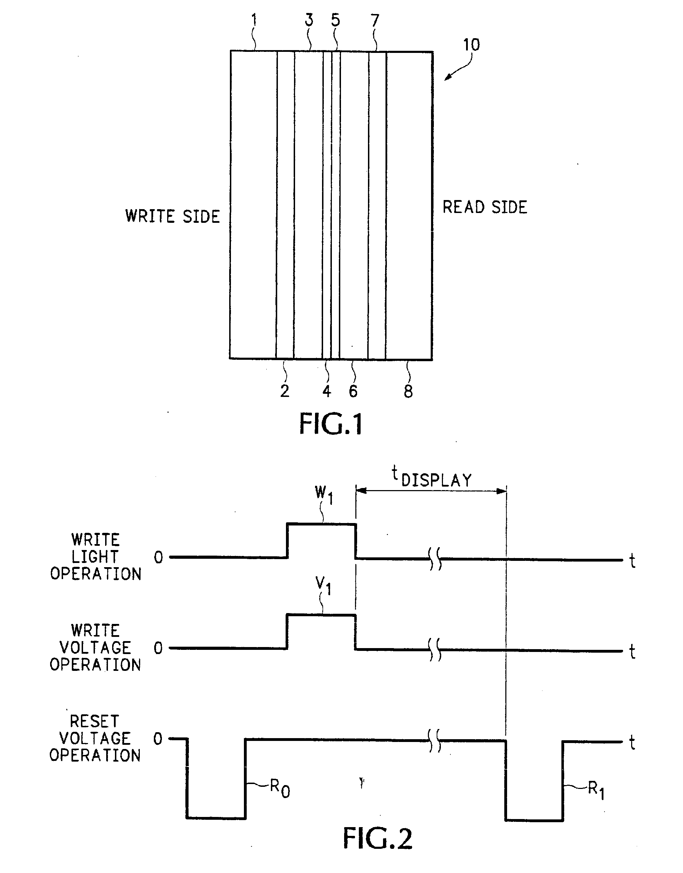

Figure 1 diagrammatically illustrates an optically addressable spatial light modulator (OASLM) shown in cross-sectional form. The layers of the OASLM 10 are not shown to scale. Substrates 1 and 8 provide the main structural support for the device. The electrodes 2 and 7 are coated onto these. A modulation layer 6 comprises a ferroelectric liquid crystal (FLC) material bounded on each side by an alignment layer, not shown. The OASLM may have a ferroelectric LC layer (FLC), or other type of modulation layer to be charge balanced, such as general LC materials.

The device may further comprise a mirror 5, a light blocking layer 4, and a photoconductor 3. A static charge is placed across the modulation layer 6 when light hits the photoconductor 3 and switches a voltage between the electrodes across the FLC material. It is a buildup of this static charge that is prevented by various embodiments described herein.

Figure 2 diagrammatically illustrates in simplified form waveforms generated in a system driving an OASLM. and the timing of the signals used when writing to the OASLM. Following an initial reset pulse R0, both the write light pattern W1 and the OASLM voltage V1 may be switched on, resulting in the pattern being transferred through to the modulation layer of the device. The modulation pattern is then available for the next stage of the system employing the device, such as display to a user or a camera. After this display period is over, a further reset pulse Rn is sent to the device to place the modulation layer back to a known reset state, ready for the next write operation. The reset pulses R0 R1 may be larger than the write voltage pulse W1. In order to remove the charge across the modulator, the reset pulse goes through a photoconductor layer that is at a high impedance (as it is not at that stage illuminated by the write light.)

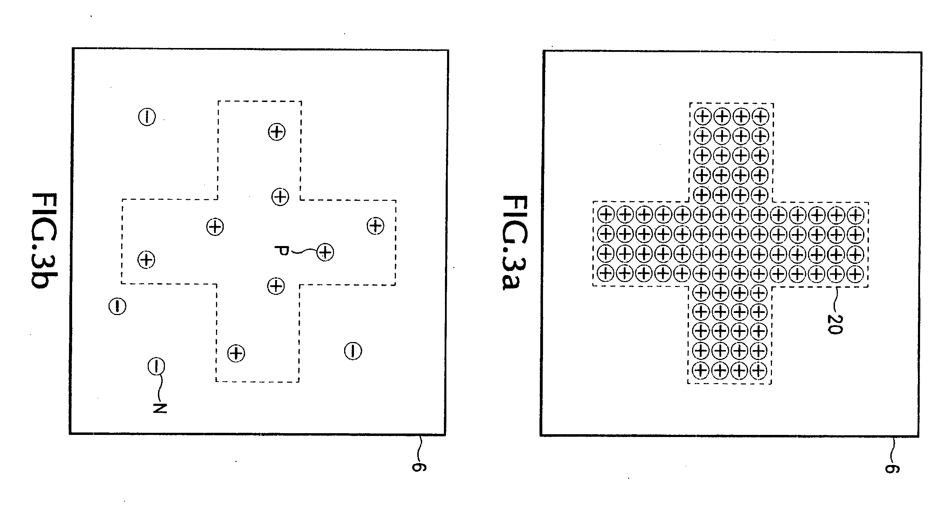

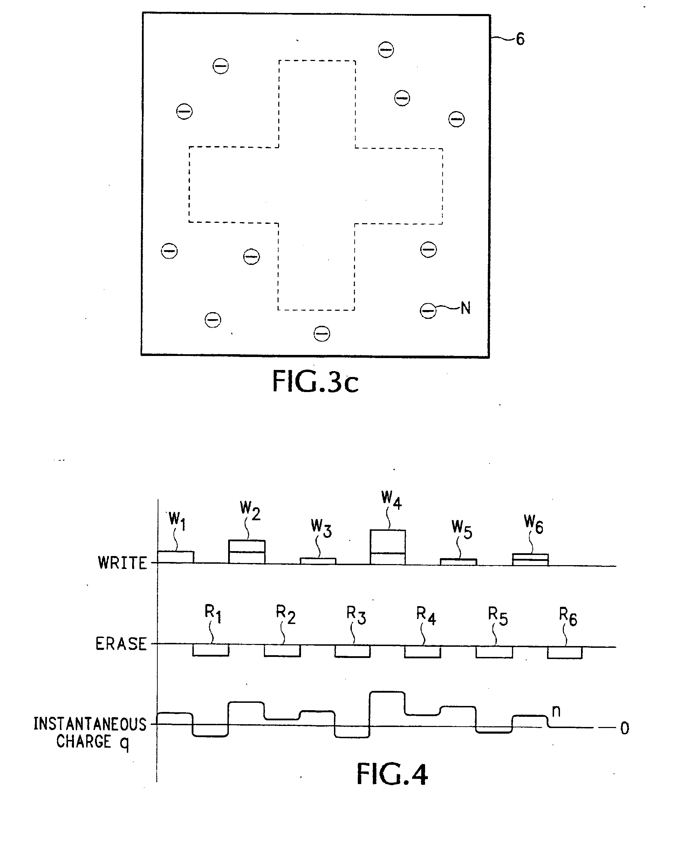

Figure 3 diagrammatically illustrates the charge present on an LC device at various stages in the writing and erasing cycle. A charge is put onto the LC layer 6 when a pattern 20, illustrated as a cross comprised of multiple plus (+) symbols, is written to an OASLM. Each plus symbol represents a quantity of positive charge P, while the negative (-) symbols represents a quantity of negative charge N. Blank areas in the figures represent a neutral charge. Figure 3a shows the charge after writing the pattern 20 to an OASLM that previously had no residual charge across it. At Figure 3b, an erase pulse has been generated that was not large enough to completely eradicate the positive charge P in the pattern 20. The areas that were at neutral charge now have a small negative charge N from the reset pulse. If a larger reset pulse is applied as shown in Figure 3c to completely eradicate the positive charge, then a greater residue of negative charge N accumulates in those areas that were previously neutral.

Figure 4 diagrammatically illustrates the charge present on a pixel of an OASLM when being driven. The upper graph shows the illumination from the write light that is incident on a single pixel of the OASLM. Not shown is the write voltage pulse, which may be a pulse of fixed amplitude synchronized in time with the write light. The illumination to the pixel may be different in its intensity for each write operation, due to the nature of the patterns being written to the device. These different intensities mean that, for the pixel in question, different amounts of charge are dumped onto the device during each write operation. The erase pulses (the middle graph), on the other hand, are shown as being similar in amplitude as they are applied across the whole device. In various embodiments, the intensity of the erase pulse is not tailored to each individual pixel.

The lower graph of Figure 4 shows the accumulation of charge for the pixel. A series of write operations is shown as write pulses W1 to W6, whereas a series of erase operations is shown as erase pulses R1 to R6. Although for most of the pulse sequence the charge is non zero (mostly positive in the example as drawn), after a number n of write operations and reset operations have been completed the net charge on that pixel is zero. The data written to that pixel may be constrained so as to provide a known amount of light to the pixel over the n write operations, but otherwise may be constrained as a result of the pattern being written to the whole device. A certain amount of residual charge may build up during the cycle of n frames.

In applications where the data to be displayed varies greatly from pixel to pixel, such as when displaying diffraction fringes to produce computer generated holograms, diffraction fringes typically comprise series of closely spaced "black and white" lines. These black and white lines correspond to modulated and unmodulated areas. Single pixel shifts of the whole pattern being written to the device can be used to control the light intensity being written to a pixel over the n write operations.

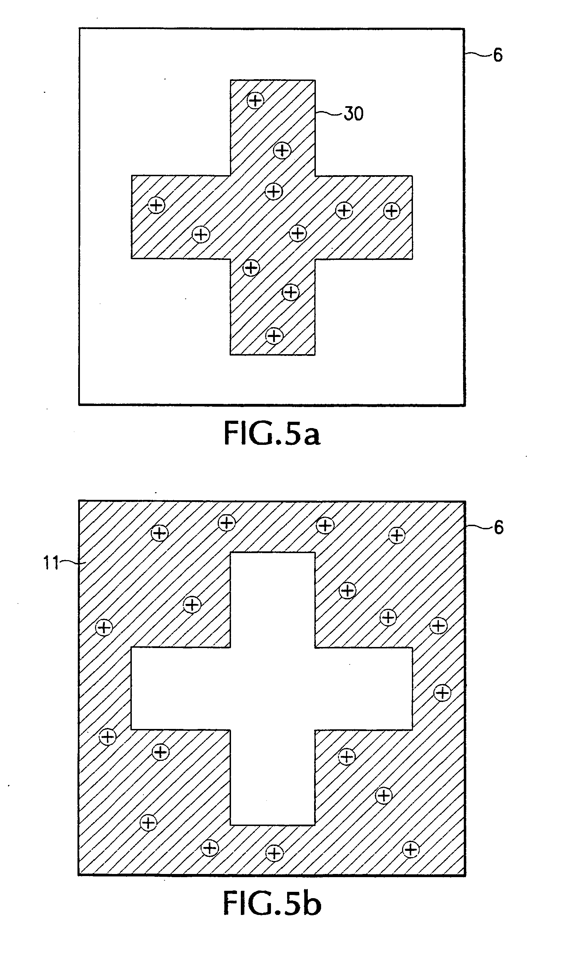

Figure 5 diagrammatically illustrates the charge present on an LC device at various stages in the writing and erasing cycle. Figure 5a shows the charge on the modulation layer 6 after a pattern, or positive image 30, has been written to a device. Instead of erasing the positive image 30 and writing the next one, this particular embodiment writes the negative image 11, shown in Figure 5b, of the positive image to the device and then provides a reset pulse. In this way, a uniform charge of known quantity is built up every frame, and the reset pulse takes off the whole of this charge. Any degradation of the pattern is minimized.

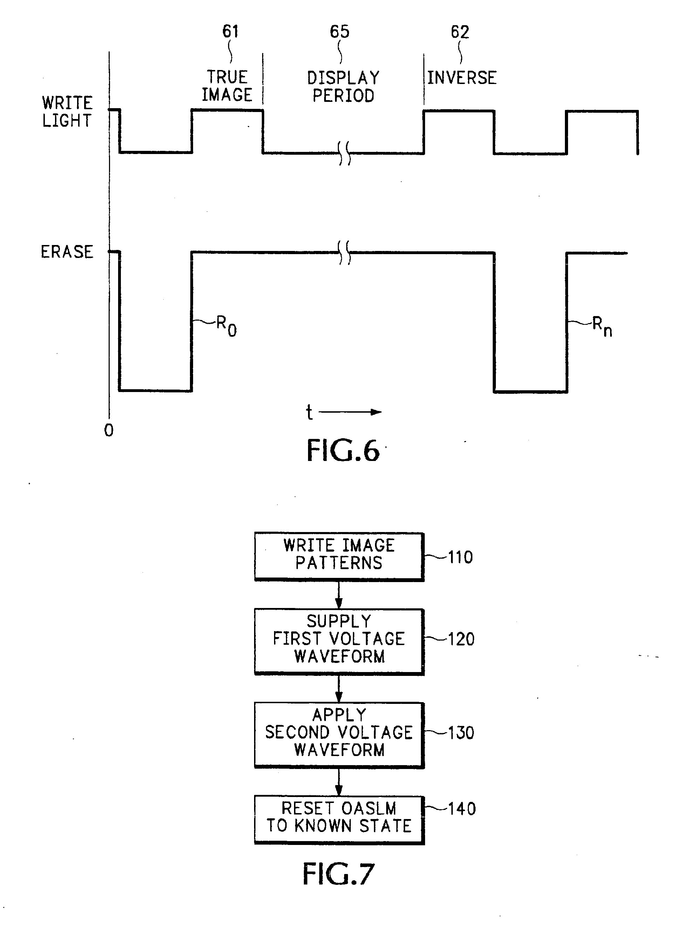

Figure 6 diagrammatically illustrates in simplified form typical waveforms generated in a system driving an OASLM and the timing of the write and erase activity. Whereas the write light graph of Figure 4 showed the intensity of the light at a single pixel, the write light activity in the top graph of Figure 6 shows general write activity to the whole device.

Starting at t=0, an initial erase or reset pulse R0 is provided that takes off all residual charge from the OASLM modulation layer 6. Following this, the image to be displayed 61, or true image is written to the device and held there for the display period 65. This period will vary according to the application. Following this, a negative or inverse image 62 of the true image 61 is written to the device. As a result, the whole of the modulation layer 6 may be provided with a known, iniform charge. The amplitude and duration of the erase or reset pulse Rn may therefore be arranged to remove the known charge.

The OASLM described herein may be implemented on an Active-Tiling® Computer Generated Hologram display system. Active Tiling is described further in US Patent Number 6,437,919, the specification of which is incorporated by reference. The computer system used to produce the CGH can be a standalone unit, or can have remote elements connected by a network.

The Active Tiling system may be configured to produce holographic moving images by rapidly replaying different frames of a holographic animation. The Active Tiling system may comprise a system for directing light from a light source onto a first spatial light modulator (SLM) means and relaying a number of SLM subframes of the modulated light from the first high speed SLM means onto a second, spatially complex SLM. The CGH may be projected from this second SLM.

The full CGH pattern may be split up into subframes in which the number of pixels is equal to the complexity of the first SLM. These frames are displayed time-sequentially on the first SLM and each frame is projected to a different part of the second SLM. The full image is thus built up on the second SLM over time. The first SLM may comprise an array of the first SLMs that each tile individual subframes on the second SLM over their respective areas. In one embodiment, the modulation pattern of the first SLM can be changed quickly compared to that of the second SLM. Thus its updating frame rate may be greater than the read-out frame rate of the second SLM. The second SLM of such a system may be an OASLM.

The image produced at the second SLM, which may be addressed at a rate much slower than that of the first SLM array, is effectively governed by the operation of the first SLM. This permits a tradeoff between the temporal information available in the high frame rate SLMs used in the SLM array and the high spatial resolution that can be achieved using current optically addressed SLMs as the second SLM. In this way, a high spatial resolution image can be rapidly written to an SLM using a sequence of lower resolution images.

Figure 7 illustrates a method for driving an OASLM. The OASLM may comprise a photoconductor layer, a modulation layer and electrode layers, wherein during a single cycle of operation the modulation layer may be supplied with a zero net charge.

At operation 110, a plurality of image patterns are written to an optically addressable spatial light modulator (OASLM) comprised of a plurality of pixels. An amount of light provided to each of the pixels may vary with an intensity of the image patterns. At operation 120, a first voltage waveform is supplied to the OASLM and is synchronized with the writing of the plurality of image patterns. At operation 130, a second voltage waveform is supplied to the OASLM. At operation 140 the OASLM is reset to a known state. In one embodiment, the known state is a zero net DC voltage.

In one embodiment, an apparatus for driving an OASLM comprises means for generating an electrical pulse and means for generating an optical pattern. The OASLM includes a photoconductor layer, a modulation layer and electrode layers. For each pixel of the OASLM, the driving apparatus is arranged to write, over a predetermined number of write operations, a similar amount of light. Between each write operation, a reset pulse is applied to the whole electrode.

In a non-claimed example, the light may be written to each pixel at a known level after a predetermined number of write operations. Therefore, the amount of light written to each pixel can vary between successive write operations. The reset pulse, being applied to the whole of the electrode, may not be tailored to remove the charge from the individual pixel. After the reset pulse, the pixel may still have a net positive or negative charge, depending on the light level written to it. However, after a predetermined number of write operations, the amount of light written to a given pixel is known. The reset pulse may be arranged such that on average, after the predetermined number of write operations and reset pulse operations to that pixel, the net charge on that pixel is zero.

In one embodiment, the OASLM devices is not physically pixellated, so use of the word pixel in relation to such an OASLM herein refers to the smallest area capable of being independently modulated.

In a non-claimed example, the number of frames, n, over which the average of the reset pulse takes place may be small enough such that the charge build up during the averaging process is not sufficiently large to have a degrading effect on the LC material. This criterion effectively provides the upper bound on the number of frames over which the light to all pixels should be uniform. The number may vary for different embodiments and for different applications.

Although substantially all pixels of the device may receive approximately the same amount of light over a set of n write operations, for any two pixels the n write operations need not be synchronized with each other. Pixel p1 may receive the known amount of light over write operations 1 to n, while pixel p2 may receive the known amount of light over write operations 2 to (n+1).

In a non-claimed example, certain types of data written to the OASLM have statistical properties that provide a known probability that, over a predictable number of frames, each pixel of the OASLM may receive a substantially similar amount of light as the other pixels. If that probability is greater than some threshold and the number of frames is within the upper limit, then no further action need be taken to make the light distribution uniform across the OASLM. Data that has, at a pixel level, an even probability distribution will ensure this occurs. A reset pulse of known level and duration can then be used to remove the net charge applied by these write actions.

By manipulating the light data used to write to the OASLM, it can be arranged that there is a known, uniform light level sent to a sufficient percentage of the pixels when time-averaged over a known number of frames. Various ways of manipulating the data exist, depending on the application and form of data. It is not necessary for the data to be manipulated such that it is guaranteed that all pixels receive a similar amount of light over a known number of frames. Minor degradations to the image that result from non complete coverage of OASLM with a known amount of light may be tolerable for certain applications.

If a certain percentage of the pixels receive a known light level over a known quantity of frames, and the areas receiving this level are randomly distributed, then the next quantity of frames is statistically likely to ensure that a similar percentage of the areas missed the first time round will be balanced in the second round. In one example, the threshold percentage of pixels receiving the similar amount of light is 80% or more. In other examples, the threshold is 90% or 95% for example.

Methods of organizing data to provide a known light level to each pixel when time-averaged over a series of frames are described further in US Patent Number 6,930,693, the specification of which is herein incorporated by reference.

In various examples, the OASLM device has either one or both electrodes divided up into separately addressable segments so as to allow for the separate electrical addressing of different parts of the device. The references made herein to writing electrically to a device, or an OASLM, may be understood to mean writing to at least one of such separately addressable segments.

According to another embodiment, a system for driving an OASLM comprises means for generating an electrical pulse and means for generating an optical pattern . The OASLM may include a photoconductor layer, a modulation layer and electrode layers. The driving apparatus is arranged to write a plurality of light patterns to the photoconductor. For each pattern, a voltage is applied to the electrodes to switch appropriate parts of the modulation layer according to the pattern.

In one embodiment, the second pattern to be written to the photoconductor is the negative image of the first one. The summation of such a second pattern with the first may place the modulation layer into a known, uniform, modulated state, and thus allow a predetermined voltage waveform to be supplied to the electrodes to reset the modulation layer to a known reset state. If such a second pattern is provided, no further light patterns are needed to generate a uniform modulation pattern. In various embodiments, three or more patterns may be summed together to produce a uniform modulation pattern on the modulation layer.

In one embodiment, the reset waveform, which removes the charge from the modulation layer, is delivered at a point in the optical writing cycle where the modulation has been uniformly addressed. The reset waveform may be distributed across the cycle by interspersing optical writing actions with smaller reset waveforms.

The system described above can use dedicated processor systems, micro controllers, programmable logic devices, or microprocessors that perform some or all of the operations. Some of the operations described above may be implemented in software and other operations may be implemented in hardware.

For the sake of convenience, the operations are described as various interconnected functional blocks or distinct software modules. This is not necessary, however, and there may be cases where these functional blocks or modules are equivalently aggregated into a single logic device, program or operation with unclear boundaries. In any event, the functional blocks and software modules or features of the flexible interface can be implemented by themselves, or in combination with other operations in either hardware or software.

Having described and illustrated the principles in a preferred embodiment thereof, it should be apparent that the embodiments may be modified in arrangement and detail without departing from such principles. We claim all modifications and variation coming within the scope of the following claims.

## Claims

1. An apparatus for driving an optically addressed spatial light modulator OASLM including a modulation layer notionally divided into a plurality of separately addressable segments, the apparatus comprising:
a pulse generator configured to provide electrical pulses to be applied to the OASLM; and
an optical pattern generator configured to provide light to be applied to the plurality of separately addressable segments to produce an optical pattern consisting of a first set of segments written to a voltage of a first polarity and a second set of non-written segments,
wherein the apparatus is **characterised in** being configured to: generate a predetermined amount of light associated with the optical pattern to be written to the first set of segments to generate a first voltage pattern of said first polarity at the first set of segments to display the optical pattern;
generate, after a period of displaying the optical pattern, a predetermined amount of light to be written to the second set of segments to generate a second voltage pattern of the first polarity at the second set of segments, thereby providing the whole of the modulation layer with a known, uniform charge; and
thereafter generate a reset voltage pulse to be applied to both the first and second sets of segments, wherein the reset voltage pulse is predetermined to remove the known charge.

2. The apparatus according to claim 1 wherein the amount of light written to each segment varies between successive write operations for writing optical patterns.

3. The apparatus according to claim 1 wherein said reset voltage pulse has a pulse width and amplitude arranged to remove the known charge.

4. A method of driving an optically addressed spatial light modulator (OASLM) including a modulation layer notionally divided into a plurality of separately addressable segments, the method comprising:
providing light to the plurality of separately addressable segments to produce an optical pattern consisting of a first set of segments written to a voltage of a first polarity and a second set of non-written segments, **characterised by**:
writing a predetermined amount of light associated with the optical pattern at the first set of segments to generate a first voltage pattern at the first set of segments to display the optical pattern;
writing, after a period of displaying the optical pattern, a predetermined amount of light to the second set of segments to generate a second voltage pattern at the second set of segments of the OASLM such that the whole of the modulation layer of the OASLM is provided with a known, uniform charge; and
thereafter supplying a reset voltage pulse to both the first and second sets of the segments to remove the known charge.

5. The method according to claim 4 wherein the reset voltage pulse comprises an amplitude and a pulse width arranged to remove the known charge.

6. The method according to claim 4 further comprising:
shifting the optical patterns to control the amount of light provided to each of the segments.

7. A computer-readable medium having instructions stored thereon for performing the method of any one of claims 4 to 6, when the instructions are executed by a programmable device.

8. A system comprising an optically addressed spatial light modulator OASLM and an apparatus for driving the OASLM according to any one of claims 1 to 3.

## Patentansprüche

1. Vorrichtung zum Ansteuern eines optisch adressierten Raumlichtmodulators OASLM, einschließlich einer Modulationsschicht, die theoretisch in mehrere getrennt adressierbare Segmente unterteilt ist, wobei die Vorrichtung Folgendes umfasst:
einen Impulsgenerator, der zum Bereitstellen von elektrischen Impulsen ausgelegt ist, die auf den OASLM angewendet werden sollen; und
einen optischen Mustergenerator, der zum Bereitstellen von Licht ausgelegt ist, welches auf die mehreren getrennt adressierbaren Segmente angewendet werden soll, um ein optisches Muster zu erzeugen, das aus einem ersten Satz von Segmenten, der in eine Spannung einer ersten Polarität geschrieben wird, und einem zweiten Satz von nicht geschriebenen Segmenten besteht,
wobei die Vorrichtung **dadurch gekennzeichnet ist, dass** sie für Folgendes ausgelegt ist:
Erzeugen einer vorgegebenen Lichtmenge, die mit dem optischen Muster verbunden ist, welches in den ersten Satz von Segmenten geschrieben werden soll, um ein erstes Spannungsmuster der ersten Polarität im ersten Satz von Segmenten zu erzeugen, um das optische Muster anzuzeigen;
nach einer Periode des Anzeigens des optischen Musters, Erzeugen einer vorgegebenen Lichtmenge, die in den zweiten Satz von Segmenten geschrieben werden soll, um ein zweites Spannungsmuster der ersten Polarität im zweiten Satz von Segmenten zu erzeugen, um so die ganze Modulationsschicht mit einer bekannten, gleichförmigen Ladung zu versehen; und
danach Erzeugen eines Reset-Spannungsimpulses, der auf den ersten und den zweiten Segmentsatz angewendet werden soll, wobei der Reset-Spannungsimpuls vorgegeben ist, um die bekannte Ladung zu entfernen.

2. Vorrichtung nach Anspruch 1, wobei die Lichtmenge, die in jedes Segment geschrieben werden soll, zwischen aufeinanderfolgenden Schreiboperationen zum Schreiben von optischen Mustern variiert.

3. Vorrichtung nach Anspruch 1, wobei der Reset-Spannungsimpuls eine Impulsbreite und Amplitude hat, die zum Entfernen der bekannten Ladung ausgelegt sind.

4. Verfahren zum Ansteuern eines optisch adressierten Raumlichtmodulators OASLM, einschließlich einer Modulationsschicht, die theoretisch in mehrere getrennt adressierbare Segmente unterteilt ist, wobei das Verfahren Folgendes umfasst:
Bereitstellen von Licht für die mehreren getrennt adressierbaren Segmente, um ein optisches Muster zu erzeugen, das aus einem ersten Satz von Segmenten, welcher in eine Spannung einer ersten Polarität geschrieben wird, und einem zweiten Satz von nicht beschriebenen Segmenten besteht, **gekennzeichnet durch**:
Schreiben einer vorgegebenen Lichtmenge, die mit dem optischen Muster verbunden ist, in den ersten Satz von Segmenten, um ein erstes Spannungsmuster im ersten Satz von Segmenten zu erzeugen, um das optische Muster anzuzeigen;
nach einer Periode der Anzeige des optischen Musters, Schreiben einer vorgegebenen Lichtmenge in den zweiten Satz von Segmenten, um ein zweites Spannungsmuster im zweiten Satz von Segmenten des OASLM zu erzeugen, so dass die ganze Modulationsschicht des OASLM mit einer bekannten, gleichförmigen Ladung versehen ist; und
danach Zufuhr eines Reset-Spannungsimpulses zum ersten und zweiten Satz der Segmente, um die bekannte Ladung zu entfernen.

5. Verfahren nach Anspruch 4, wobei der Reset-Spannungsimpuls eine Amplitude und eine Impulsbreite umfasst, die zum Entfernen der bekannten Ladung ausgelegt sind.

6. Verfahren nach Anspruch 4, das ferner Folgendes umfasst:
Verschieben des optischen Musters, um die Lichtmenge zu kontrollieren, die für jedes der Segmente vorgesehen ist.

7. Computerlesbares Medium, das Anweisungen zum Ausführen des Verfahrens nach einem der Ansprüche 4 bis 6 darin enthält, wenn die Anweisungen von einer programmierbaren Vorrichtung ausgeführt werden.

8. System, das einen optisch adressierten Raumlichtmodulator OASLM und eine Vorrichtung zum Ansteuern des OASLM nach einem der Ansprüche 1 bis 3 umfasst.

## Revendications

1. Appareil pour piloter un modulateur spatial de lumière à adressage optique OASLM comportant une couche de modulation divisée théoriquement en une pluralité de segments adressables séparément, l'appareil comprenant :
un générateur d'impulsions configuré pour fournir des impulsions électriques à appliquer à l'OASLM ; et
un générateur de motif optique configuré pour fournir de la lumière à appliquer à la pluralité de segments adressables séparément pour produire un motif optique constitué d'un premier ensemble de segments écrits à une tension d'une première polarité et un deuxième ensemble de segments non écrits,
l'appareil étant **caractérisé en ce qu'**il est configuré pour :
générer une quantité prédéterminée de lumière associée au motif optique à écrire sur le premier ensemble de segments pour générer un premier motif de tension de ladite première polarité au niveau du premier ensemble de segments afin d'afficher le motif optique ;
générer, après une période d'affichage du motif optique, une quantité prédéterminée de lumière à écrire sur le deuxième ensemble de segments pour générer un deuxième motif de tension de la première polarité au niveau du deuxième ensemble de segments, dotant ainsi la totalité de la couche de modulation d'une charge connue, uniforme ; et
par la suite, générer une impulsion de tension de réinitialisation à appliquer à la fois au premier et au deuxième ensemble de segments, l'impulsion de tension de réinitialisation étant prédéterminée pour retirer la charge connue.

2. Appareil selon la revendication 1 dans lequel la quantité de lumière écrite sur chaque segment varie entre opérations d'écriture successives pour écrire des motifs optiques.

3. Appareil selon la revendication 1 dans lequel ladite impulsion de tension de réinitialisation a une largeur et une amplitude d'impulsion configurées pour retirer la charge connue.

4. Procédé de pilotage d'un modulateur spatial de lumière à adressage optique (OASLM) comportant une couche de modulation divisée théoriquement en une pluralité de segments adressables séparément, le procédé comprenant :
la fourniture de lumière à la pluralité de segments adressables séparément pour produire un motif optique constitué d'un premier ensemble de segments écrits à une tension d'une première polarité et un deuxième ensemble de segments non écrits, **caractérisé par** :
l'écriture d'une quantité prédéterminée de lumière associée au motif optique au niveau du premier ensemble de segments pour générer un premier motif de tension au niveau du premier ensemble de segments afin d'afficher le motif optique ;
l'écriture, après une période d'affichage du motif optique, d'une quantité prédéterminée de lumière sur le deuxième ensemble de segments pour générer un deuxième motif de tension au niveau du deuxième ensemble de segments de l'OASLM de telle sorte que la totalité de la couche de modulation de l'OASLM est dotée d'une charge connue, uniforme ; et
par la suite, l'application d'une impulsion de tension de réinitialisation à la fois au premier et au deuxième ensemble de segments pour retirer la charge connue.

5. Procédé selon la revendication 4 dans lequel l'impulsion de tension de réinitialisation comprend une amplitude et une largeur d'impulsion configurées pour retirer la charge connue.

6. Procédé selon la revendication 4 comprenant en outre :
le déplacement des motifs optiques pour contrôler la quantité de lumière fournie à chacun des segments.

7. Support lisible par ordinateur ayant des instructions stockées sur celui-ci pour mettre en oeuvre le procédé de l'une quelconque des revendications 4 à 6 quand les instructions sont exécutées par un dispositif programmable.

8. Système comprenant un modulateur spatial de lumière à adressage optique OASLM et un appareil pour piloter l'OASLM selon l'une quelconque des revendications 1 à 3.
